# EUROPÄISCHE PATENTSCHRIFT

(11) **EP 1 428 423 B1**
(45) Veröffentlichungstag und Bekanntmachung des Hinweises auf die Patenterteilung: **06.09.2006**
(21) Anmeldenummer: 03027214.0
(22) Anmeldetag: 28.11.2003
(51) Int. Cl.: A01D 45/02, A01D 43/00

(54) **Einzugs- und Pflückeinrichtung**
Intake and picking device
Dispositif de prise et de cueillette

(30) Priorität: 11.12.2002 DE 10257776
(43) Veröffentlichungstag der Anmeldung: 16.06.2004
(73) Patentinhaber: Maschinenfabrik Kemper GmbH & Co. KG, 48973 Stadtlohn (DE)
(72) Erfinder: Rickert, Clemens, 48703 Stadtlohn (DE); Bongert, Dirk, 48703 Stadtlohn (DE)
(74) Vertreter: Holst, Sönke

(56) Entgegenhaltungen:
- EP-A- 0 267 700
- DE-A- 10 028 887
- GB-A- 1 046 196
- US-A- 4 377 062
- US-A1- 2001 003 237

## Beschreibung

Die Erfindung betrifft eine Einzugs- und Pflückeinrichtung, mit einem auf einer ersten Seite eines Pflückspalts angeordneten Einzugselement, das um eine etwa vertikal verlaufende Achse in Drehung versetzbar und mit Mitnehmern versehen ist, die geeignet sind, im Betrieb auf einem Feld stehende Pflanzen zu erfassen, in Zusammenwirken mit einem stromaufwärts des eingangsseitigen Endes des Pflückspalts auf der zweiten Seite des Pflückspalts angeordneten Förderelement in den Pflückspalt einzuführen und über wenigstens einen Teil der Länge des Pflückspalts zu transportieren, wobei ein Pflückaggregät betreibbar ist, die Pflanzen durch den Pflückspalt nach unten zu transportieren, so dass Fruchtstände der Pflanzen abgetrennt werden.

Die US 4 377 062 A zeigt einen Maispflücker, bei dem eine Förderschnecke oberhalb der Pflückwalzen angeordnet ist. Sie fördert die Pflanzenstängel in und durch den Pflückspalt. Außerdem transportiert sie die gepflückten Fruchtstände ab. Auf der der Förderschnecke gegenüberliegenden Seite des Pflückspalts befindet sich unterhalb des Pflückspalts an dessen Einlass ein unteres Einzugsrad. Ein oberes Einzugsrad ist koaxial zum unteren Einzugsrad oberhalb der Förderschnecke angeordnet. Die Einzugsräder dienen dazu, die Pflanzen in den Pflückspalt zu fördern.

In der DE 100 28 887 A wird ein anderes Maisernte-Vorsatzgerät beschrieben, bei dem ein um eine etwa vertikal stehende Achse rotierendes, mit etwa radial orientierten Mitnehmern versehenes Einzugselement Stängel von auf einem Feld stehenden Pflanzen erfasst und entlang des Pflückspalts einer Pflückeinrichtung transportiert. Durch die Verwendung des rotierenden Einzugselements erreicht man, dass die Arbeitsbreite gegenüber konventionellen, mit Einzugsketten arbeitenden Pflückern vergrößert ist, da auch seitlich neben dem Pflückspalt stehende Pflanzen aufgenommen werden. Die Baulänge ist, da das Einzugselement die Pflanzen auch durch den Pflückspalt bewegt, relativ kurz. Um mögliche Förderprobleme beim Einführen der Pflanzen in den Pflückspalt zu vermeiden, ist auf der dem Einzugselement gegenüberliegenden Seite des Pflückspalts ein weiteres Förderelement in Form einer Förderschnecke oder eines Kettenförderers angeordnet, das die Pflanzen in den Pflückspalt einführt. Trotzdem können sich bei bestimmten Erntebedingungen Förderprobleme ergeben.

Die der Erfindung zu Grunde liegende Aufgabe wird darin gesehen, eine verbesserte Einzugs- und Pflückeinrichtung bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, das Förderelement, das auf der dem Einzugselement gegenüberliegenden Seite des Pflückspalts angeordnet ist und das das Einzugselement, dessen Arbeitsbreite sich in der Regel seitlich über den Pflückspalt hinaus erstreckt, beim Einführen der Pflanzen in den Pflückspalt unterstützt, um eine etwa vertikal verlaufende Achse in Drehung zu versetzen.

Auf diese Weise besteht die Möglichkeit, ein relativ flaches Förderelement zu verwenden, so dass man einen recht flachen Gesamtaufbau der die Förder- und Einzugselement umfassende Einzugseinrichtung erhält. Das Förderelement ist weniger aufwändig als die im Stand der Technik vorgeschlagenen Förderschnecken und Kettenförderer, leichter und preiswerter verfügbar und hat eine lange Lebensdauer. Bei hinreichend geringem Abstand zwischen dem Förder- und dem Einzugselement ist auch eine Reinigungswirkung erzielbar, da das Förderelement Pflanzenreste vom Einzugselement abtragen kann.

Das Förderelement kann mit überstehenden, zahnförmigen Mitnehmern versehen sein. Diese Mitnehmer können am Rand einer Scheibe angeordnet sein, so dass sich zwischen den Mitnehmern taschenförmige Aussparungen ergeben, die jeweils zur Aufnahme des Stängels einer Pflanze (oder mehrerer Pflanzen) geeignet sind. Denkbar wäre auch eine Verwendung von fingerartigen Mitnehmern, die sich etwa radial erstrecken und vorzugsweise ein abweisendes Förderverhalten aufweisen, d. h. nachlaufend gekrümmt sind.

Das - wie das Einzugselement - um eine etwa vertikale Achse rotierende Förderelement fördert die Pflanzen problemlos in den Pflückspalt hinein. Ein weiteres Förderelement, das an der Spitze einer Pflückwalze angeordnet sein könnte und sich bis vor den Einlauf des Pflückspalts erstreckt, erübrigt sich somit in der Regel, so dass es hinreicht, wenn sich die einlaufseitigen Enden der Pflückwalzen etwa unterhalb des Einlaufbereichs des Pflückspalts befinden. Die Pflückwalzen können somit kürzer und preiswerter gestaltet werden. Außerdem besteht dadurch die Möglichkeit, das Abstreifblech näher an den Erboden zu bringen, was Vorteile bei der Aufnahme von Lagermais hat. Die einlaufseitigen Enden der Pflückwalzen können mit Förderschnecken versehen sein, um das Einlaufen der Pflanzen zu erleichtern. Es wäre aber auch denkbar, zumindest eine der Pflückwalzen länger zu gestalten.

Um das Einführen der Pflanzen in den Pflückspalt durch das Zusammenwirken von Einzugs- und Förderelement zu verbessern, ist es zweckmäßig, wenn sich ihre Hüllkreise überlappen. So können sie die Pflanze unproblematisch gemeinsam in den Pflückspalt einbringen.

Die Fördergeschwindigkeit des Förderelements ist in dem Bereich, an dem es gemeinsam mit dem Einzugselement die Pflanzen fördert, vorzugsweise etwa gleich der Geschwindigkeit, die das Einzugselement an dieser Stelle hat. Man erreicht dadurch eine gleichmäßige, stetige Förderung. Befindet sich das Förderelement hingegen oberhalb des Einzugselements, kann seine Fördergeschwindigkeit größer als die des Einzugselements sein, damit sich die oberen Teile der Pflanzen nach hinten neigen und eventuell herabfallende Fruchtstände von der Einzugs- und Pflückeinrichtung aufgenommen werden können. Befindet sich das Förderelement unterhalb des Einzugselements, kann seine Fördergeschwindigkeit analog kleiner als die des Einzugselements sein. Weist das Förderelement weiterhin einen Teil auf, der sich oberhalb des Einzugselements befindet und einen Teil, der sich darunter befindet, können diese Teile mit unterschiedlichen Geschwindigkeiten angetrieben werden, damit sich die oberen Teile der Pflanze nach hinten neigen.

In einer bevorzugten Ausführungsform transportiert das Einzugselement die Pflanzen über die wirksame Länge des Pflückspalts, d. h. die Länge, über die die Pflanzen vom Pflückaggregat eingezogen werden. Bei anderen Ausführungsformen kann aber auch stromab des Einzugselements ein weiterer Förderer vorgesehen sein, der insbesondere dann sinnvoll ist, wenn die Länge des Pflückspalts größer als die Arbeitsbreite des Einzugselements ist. Ein derartiger Förderer kann mit dem Einzugselement gleichartig sein. Denkbar ist auch die Verwendung eines Schnecken- oder Kettenförderers. Der Förderer kann auch eine an den Pflückwalzen angebrachte Förderwendel sein, die sich auch über ihre gesamte Länge erstrecken kann.

Das Förderelement ist in einer bevorzugten Ausführungsform oberhalb des Pflückspalts angeordnet. Es wäre aber auch denkbar, es darunter anzuordnen, oder ein Förderelement oberhalb und ein Förderelement unterhalb des Pflückspalts anzubringen.

Da die Pflanzen durch das Einzugselement entlang des Pflückspalts gefördert werden, reicht es aus, wenn das Förderelement näherungsweise am Einlass des Pflückspalts endet. Man vermindert dadurch die Abmessungen des Förderelements.

In den Zeichnungen ist ein nachfolgend näher beschriebenes Ausführungsbeispiel der Erfindung dargestellt. Es zeigt:
- Fig. 1: eine schematische Draufsicht auf zwei Einzugs- und Pflückeinrichtungen eines Maispflückvorsatzes,
- Fig. 2: einen Schnitt durch die Einzugs- und Pflückeinrichtung aus Figur 1 entlang der Linie 2-2,
- Fig. 3: eine schematische seitliche Ansicht der Einzugs- und Pflückeinrichtung aus Figur 1.

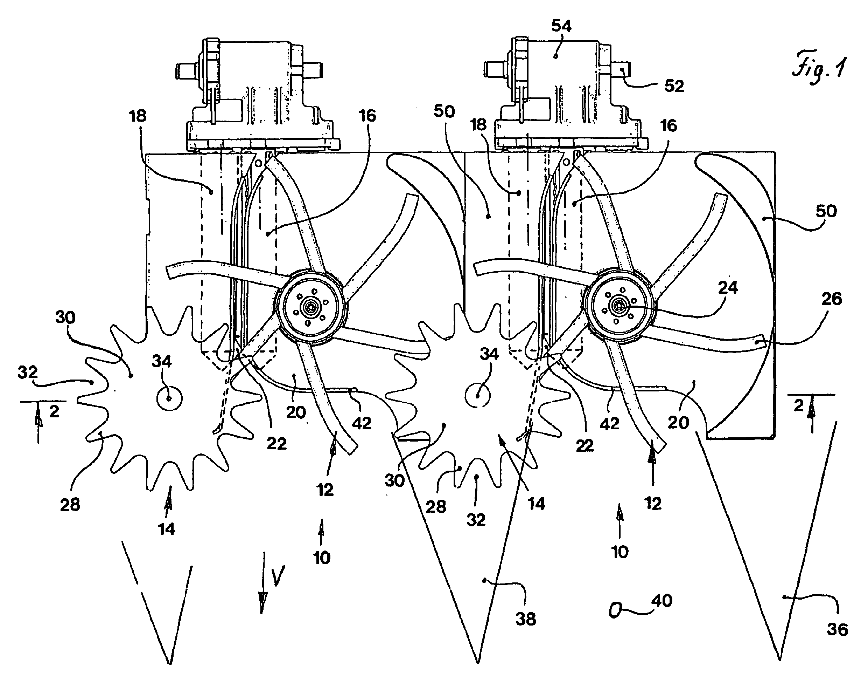

In der Figur 1 sind zwei Einzugs- und Pflückeinrichtungen 10 eines Maispflückvorsatzes für einen Mähdrescher dargestellt. Ein vollständiger Maispflückvorsatz weist in der Regel eine Mehrzahl von Einzugs- und Pflückeinrichtungen 10 auf, obwohl auch denkbar wäre, ihn mit nur einer einzelnen Einzugs- und Pflückeinrichtung 10 zu versehen.

Die Einzugs- und Pflückeinrichtung 10 weist ein Einzugselement 12, das zum Erfassen und Einziehen der zu erntenden Pflanzen dient, ein Förderelement 14, eine erste Pflückwalze 16 und eine zweite Pflückwalze 18 auf, die unterhalb eines in einem Abstreifblech 20 eingebrachten Pflückspalts 22 angeordnet sind.

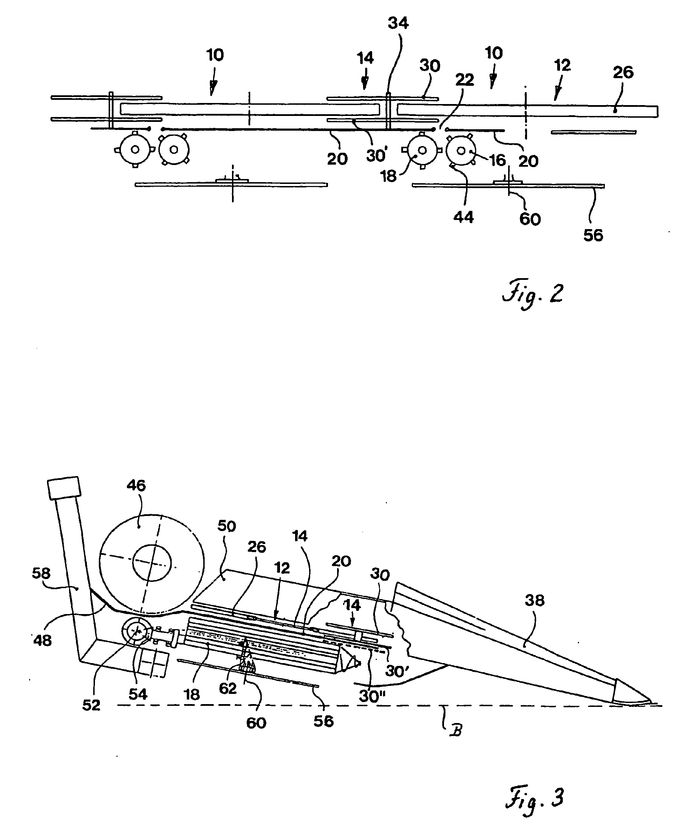

Das Einzugselement 12 befindet sich auf der in Vorwärtsrichtung V linken Seite des Pflückspalts 22, während das Förderelement 14 auf der rechten Seite des Pflückspalts 22 angeordnet ist. Das Einzugselement 12 und das Förderelement 14 sind um etwa vertikal und parallel zueinander verlaufende Achsen drehbar angeordnet und werden durch ihnen zugeordnete - in den Zeichnungen nicht erkennbare - Antriebe in Rotation versetzt. In der Figur 1 dreht sich das Einzugselement 12 im Uhrzeigersinn und das Förderelement 14 im Gegenuhrzeigersinn. Die Drehachse des Förderelements 14 ist in Vorwärtsrichtung V vor dem einlaufseitigen Ende des Pflückspalts 22 angeordnet. Das Einzugselement 12 und das Förderelement 14 sind oberhalb des Abstreifblechs 20 angeordnet und haben im Konkreten eine leicht in Vorwärtsrichtung V nach vorn geneigte Drehachse, da das Abstreifblech 20 im Betrieb geringfügig nach vorn und unten geneigt ist, wie man in der Figur 3 anhand der Bodenlinie B erkennt.

Das Einzugselement 12 besteht in seinem grundsätzlichen Aufbau aus einer die Drehachse definierenden zentralen Welle 24 und um ihren Umfang verteilten, sich im Wesentlichen radial erstreckenden fingerartigen Mitnehmern 26, die in ihrer Ebene entgegen der Drehrichtung, also nachlaufend gekrümmt sind. Die Mitnehmer 26 haben daher ein abweisendes Förderverhalten.

Alternativ oder zusätzlich zu der Krümmung der Finger 26 wäre eine gesteuerte, radiale und/oder azimutale Bewegung der Finger 26 relativ zur Welle 24 denkbar, wie sie von Haspelzinken bzw. Fingern an Förderschnecken von Schneidwerken her bekannt ist, und durch eine Exzentersteuerung o. ä. erzielt werden kann, um ein abweisendes Förderverhalten zu erzielen.

Das Förderelement 14 weist eine mit zahnförmigen Mitnehmern 28 ausgestattete Scheibe 30 auf. Zwischen den Mitnehmern 28 verbleiben taschenförmige Aussparungen 32. Wie anhand der Figur 2 erkennbar ist, setzt sich das Förderelement 14 aus zwei koaxial übereinander angeordneten und starr miteinander antriebsverbundenen Scheiben 30, 30' zusammen, die durch eine die Drehachse definierende Welle 34 miteinander verbunden sind, wobei die Mitnehmer 28 der Scheiben 30, 30' jeweils genau übereinander liegen. Die untere Scheibe 30' ist, betrachtet man die vertikale Richtung, zwischen dem Abstreifblech 20 und den Mitnehmern 26 des Einzugselements 12 angeordnet, während sich die obere Scheibe 30 oberhalb der Mitnehmer 26 befindet. Daher können die Mitnehmer 26 der auf den beiden Seiten des Förderelements 14 angeordneten Einzugselemente 12, deren Hüllkreise sich jeweils mit dem des Förderelements 14 überdecken, kollisionsfrei zwischen den Scheiben 30 hindurchlaufen.

Es wäre weiterhin denkbar, eine weitere Scheibe 30" unterhalb des Pflückspalts 22 anzuordnen. Sie kann zusätzlich zu den anderen Scheiben 30, 30' oder alternativ dazu angebracht werden.

Wie anhand der in Figur 1 dargestellten Draufsicht auf die Einzugs- und Pflückeinrichtung 10 erkennbar ist, sind den Einzugselementen 12, 14 in Vorwärtsrichtung V der Erntegutbergungsvorrichtung Stängelteiler 36, 38 vorgeordnet, die Pflanzen 40, welche nicht genau vor dem Einzugselement 12 stehen, während der Bewegung der Einzugs- und Pflückeinrichtung 10 in Vorwärtsfahrtrichtung V über das Feld jeweils nach innen drücken bzw. biegen, so dass sie in den Wirkbereich der Einzugselemente 12 gelangen. Auch die in Vorwärtsrichtung vorlaufende Kante 42 des Abstreifblechs 20 ist derart gekrümmt, dass die Stängel der Pflanzen 40 in den Wirkbereich der Einzugselemente 12 gedrückt werden. Die Hüllkreise und somit die Wirkbereiche der Einzugselemente 12 sind derart groß, dass die Einzugs- und Pflückeinrichtung 10 - im Zusammenwirken mit der gekrümmten vorlaufenden Kante 42 des Abstreifblechs 20 und den Stängelteilern 36, 38 - reihenunabhängig arbeitet. Die Arbeitsbreite der Einzugs- und Pflückeinrichtung 10 entspricht somit dem seitlichen Abstand der Spitzen der Stängelteiler 36, 38.

Die erste Pflückwalze 16 ist auf der Seite des Pflückspalts 22 angeordnet, auf der sich auch das Einzugselement 12 befindet und leicht nach vorn und unten geneigt. Sie ist, betrachtet man die seitliche Richtung, parallel zur Vorwärtsrichtung V orientiert. In vertikaler Richtung ist die erste Pflückwalze 16 unterhalb des Abstreifblechs 20 angeordnet. Die zweite Pflückwalze 18 befindet sich auf der anderen Seite des Pflückspalts 22 und ist mit der ersten Pflückwalze 16 baugleich, wobei der zwischen der ersten Pflückwalze 16 und der zweiten Pflückwalze 18 definierte Spalt vertikal unterhalb des Pflückspalts 22 angeordnet ist. Die mit sich über ihre Länge erstreckenden Mitnehmerrippen 44 ausgestatteten Pflückwalzen 16, 18 werden gegensinnig angetrieben und bilden ein die Pflanzen 40 nach unten in den Pflückspalt 22 ziehendes Pflückaggregat. Dabei dient das Abstreifblech 20 beidseits des Pflückspalts 22 zum Abstreifen von Fruchtständen der Pflanze 40.

Der Einlauf des Pflückspalts 22 liegt bezüglich der Vorwärtsbewegungsrichtung V vor der Drehachse des Einzugselements 12 an der Stelle, an der der sich in Bewegungsrichtung der Pflanzen 40 zunächst verengende Abstand zwischen den beiden Teilen des Abstreifbleches 20 einen über die Länge des Pflückspalts 22 konstanten Wert angenommen hat. Der Endbereich des Pflückspalts 22 ist jedoch in Richtung auf die Drehachse des Einzugselements 12 gekrümmt.

Anhand der Figur 1 ist die Wirkungsweise der Einzugselemente 12 und Förderelemente 14 gut erkennbar. Ein Stängel einer auf dem Feld stehenden Pflanze 40 gerät - nachdem er (abhängig von seiner seitlichen Position) gegebenenfalls durch die Stängelteiler 36, 38 und/oder die vorlaufende Kante 42 des Abstreifblechs 20 in Richtung auf den Pflückspalt 22 zu verbogen wurde - mit einem Mitnehmer 26 des Einzugselements 12 in Berührung. Der Stängel wird von der vorlaufenden Oberfläche des Mitnehmers 26 mitgeführt und aufgrund der nachlaufenden und daher abweisenden Krümmung des Mitnehmers 26 zum Einlauf des Pflückspalts 22 gedrückt. Auf diese Weise wird der Stängel der Pflanze 40 durch den Mitnehmer 26 in den Pflückspalt 22 transportiert, der sich zumindest näherungsweise parallel zur Vorwärtsrichtung V erstreckt und zwischen den Pflückwalzen 16, 18 und dem Einzugselement 12 in das Abstreifblech 20 eingebracht ist. Dabei wird die noch nicht vom Boden des Feldes getrennte Pflanze 40 gegebenenfalls verbogen. Sie kann ggf. später durch ein unterhalb der Pflückwalzen 16, 18 angeordnetes Häckselmesser 56 (s. Figur 3) vom Boden getrennt werden.

Beim Eintritt der Pflanzen 40 in den Pflückspalt 22 ergibt sich ein relativ stumpfer Winkel zwischen den Mitnehmern 26 des Einzugselements 12 und dem ihnen gegenüberliegenden (in Figur 1 links eingezeichneten) Rand des Abstreifblechs 20. Der Stängel der Pflanzen 40 kann aufgrund dieses stumpfen Winkels zwischen dem Abstreifblech 20 und dem Mitnehmer 26 abgequetscht werden, insbesondere wenn es sich um stark abgereifte und somit weiche Stängel von Maispflanzen handelt. Die Pflanze 40 wird in diesem Fall nicht weitertransportiert, so dass die Einzugs- und Pflückeinrichtung 10 verstopft.

Zur Lösung dieses Problems dient das Förderelement 14. Der von einem Mitnehmer 26 des Einzugselements 12 erfasste Stängel einer Pflanze 40 wird durch den Mitnehmer 26 gegen das Förderelement 14 gedrückt und in einer der taschenförmigen Aussparungen 32 aufgenommen. Die Fördergeschwindigkeit (Umfangsgeschwindigkeit der Mitnehmer 28) kann, zumindest wenn nur eine obere Scheibe 30 des Förderelements 14 verwendet wird, etwas höher als die des Einzugselements 12 sein, obwohl bevorzugt ist, wenn die Mitnehmer 26 und 28 im Bereich, in dem sie sich überlappen, etwa gleiche Fördergeschwindigkeiten haben. Dadurch wird die Pflanze 40 durch das Förderelement 14 und das Einzugselement 12 nach hinten in den Pflückspalt 22 verbracht, wobei ihr oberer Teil bei einer höheren Fördergeschwindigkeit der oberen Scheibe 30 des Förderelements 14 im Pflückspalt 22 in der Förderrichtung nach hinten gebogen wird. Dadurch erreicht man, dass aufgrund der wirkenden Beschleunigung eventuell abfallende Fruchtstände nicht auf den Erdboden fallen, sondern in den Wirkungsbereich der Fördereinrichtung 12 gelangen, die sie einer Förderschnecke 46 zuführen. Da das Förderelement 14 sich nur bis etwa zum Einlass des Pflückspalts 22 erstreckt, transportiert es die Pflanzen 40 nicht entlang des Pflückspalts 22; dazu dient das Einzugselement 12.

Außerdem kann das Förderelement 14 auf der in Fahrtrichtung V rechten Seite des Pflückspalts 22 vorhandene Pflanzen 40 erfassen, quer zur Fahrtrichtung V fördern und in den Pflückspalt 22 einführen. Dazu könnten die Teilerspitzen 36, 38 zumindest auf ihrer dem Einzugselement 14 zugelegenen Seite schmaler gestaltet und/oder das Abstreifblech 20 unterhalb des Förderelements 14 weiter ausgeschnitten werden als in den Figuren dargestellt, damit letzteres weiter über die Teilerspitze 36 bzw. 38 und das Abstreifblech 20 hinausragt, und/oder das Einzugselement 14 einen gegenüber den Figuren größeren Radius und weiter vorn liegenden Drehpunkt besitzen. Auf diese Weise können Pflanzen 40 an beiden Seiten des Pflückspalts 22 durch das Einzugselement 12 und das Förderelement 14 in den Pflückspalt 22 eingeführt werden.

Auf diese Weise gelangt der Stängel der Pflanze 40 durch die Förderwirkung des Einzugselements 12 und des Förderelements 14 in den Wirkungsbereich der beiden Pflückwalzen 16, 18, deren vordere Spitzen (bezüglich der Vorwärtsrichtung V betrachtet) unterhalb des Einlaufbereichs des Pflückspalts 22 liegen. Die Spitzen der Pflückwalzen 16, 18 sind konisch geformt. Sie könnten zum besseren Einführen der Pflanzen 40 in den Pflückspalt 22 mit Schneckenwendeln versehen sein. Während des Pflückvorgangs bewirken die Mitnehmer 26 des Einzugselements 12, dass die Pflanzen 40 über die Länge des Pflückspalts 22 transportiert werden. Die Drehzahlen der Pflückwalzen 18, 20 und des Einzugselements 12 sind zweckmäßigerweise derart bemessen, dass die gesamte Pflanze 40 in den Pflückspalt 22 nach unten eingezogen wurde, wenn sie das Ende des Pflückspalts 22 erreicht hat.

Die durch die Pflückeinrichtung abgetrennten Nutzteile der Pflanzen 40, wie Maiskolben, Fruchtstände von Sonnenblumen usw. werden durch das Einzugselement 12 in einen an der Rückseite der Einzugs- und Pflückeinrichtung 10 angeordneten Trog 48 gefördert, wobei eine Abdeckung 50 beidseits des Pflückspalts 22 einen zum Trog 48 führenden Kanal definiert, durch den die Nutzteile der Pflanzen 40 gefördert werden. Die Abdeckung 50 überdeckt die Einzugselemente 12 teilweise und erhöht durch ihre Abschirmwirkung die Funktions- und Arbeitssicherheit der Einzugs- und Pflückeinrichtung 10. Der Trog 48 kann mit dem Abstreifblech 20 einteilig oder ein davon getrenntes, separates Element sein. Die oberhalb des Trogs 40 angeordnete, quer zur Vorwärtsfahrtrichtung orientierte Förderschnecke 46 transportiert die Nutzteile zu einem Erntefahrzeug (z. B. Mähdrescher oder Feldhäcksler) oder auf einen Anhänger. Unterhalb des Trogs 48 ist eine Welle 52, die über Getriebe 54 zum Antrieb der beiden Pflückwalzen 16, 18, des Häckselmessers 56 und der Einzugs- und Förderelemente 12, 14 der Einzugs- und Pflückeinrichtungen 10 dient. Die Welle 52 steht mit dem Motor eines die Erntegutbergungsvorrichtung tragenden Fahrzeugs in Antriebsverbindung. Ein Rahmen 58 trägt die Einzugs- und Pflückeinrichtungen 10 der Erntegutbergungsvorrichtung, die alle durch die Welle 52 angetrieben werden.

Die Reste der Pflanzen 40, die von den Pflückwalzen 16, 18 nach unten abtransportiert werden, gelangen in den Wirkungsbereich des rotierenden, vierarmigen Häckselmessers 56 und werden durch dieses in einzelne Stücke zerteilt. Auf dem Feld werden somit gehäckselte Pflanzenreste abgelegt. Während des Zerteilens halten die Pflückwalzen 16, 18 die Pflanze 40 fest. Das Häckselmesser 56 rotiert um eine vertikal verlaufende Drehachse 60, die bezüglich der Vorwärtsrichtung V zwischen der Drehachse des Einzugselements 12 und der Förderschnecke 44 angeordnet ist, wie in Figur 3 erkennbar ist, und wird durch die Welle 52 über ein Winkelgetriebe 62 angetrieben. In vertikaler Richtung ist das Häckselmesser 56 unterhalb der Pflückwalzen 16, 18 positioniert. Die Drehrichtung des Häckselmessers 56 ist, betrachtet man Figur 1, im Uhrzeigersinn, so dass das gehäckselte Gut seitlich nach hinten geschleudert wird.

## Patentansprüche

1. Einzugs- und Pflückeinrichtung (10), mit einem auf einer ersten Seite eines Pflückspalts (22) angeordneten Einzugselement (12), das um eine etwa vertikal verlaufende Achse in Drehung versetzbar und mit Mitnehmern (26) versehen ist, die geeignet sind, im Betrieb auf einem Feld stehende Pflanzen (40) zu erfassen, in Zusammenwirken mit einem stromaufwärts des eingangsseitigen Endes des Pflückspalts (22) auf der zweiten Seite des Pflückspalts (22) angeordneten Förderelement (14) in den Pflückspalt (22) einzuführen und über wenigstens einen Teil der Länge des Pflückspalts (22) zu transportieren, wobei ein Pflückaggregat betreibbar ist, die Pflanzen (40) durch den Pflückspalt (22) nach unten zu transportieren, so dass Fruchtstände der Pflanzen (40) abgetrennt werden, **dadurch gekennzeichnet, dass** das Förderelement (14) um eine etwa vertikal verlaufende Achse in Drehung versetzbar ist.

2. Einzugs- und Pflückeinrichtung (10) nach Anspruch 1, **dadurch gekennzeichnet, dass** das Förderelement (14) mit überstehenden, zahnförmigen Mitnehmern (28) versehen ist.

3. Einzugs- und Pflückeinrichtung (10) nach Anspruch 1 oder 22, **dadurch gekennzeichnet, dass** die Mitnehmer (28) des Förderelements um den Umfang einer Scheibe (30, 30') verteilt sind.

4. Einzugs- und Pflückeinrichtung (10) nach einem der Ansprüche 1 bis 3, **dadurch gekennzeichnet, dass** zwischen den Mitnehmern (28) des Förderelements (14) taschenförmige Aussparungen (32) gebildet sind.

5. Einzugs- und Pflückeinrichtung (10) nach einem der Ansprüche 1 bis 4, **dadurch gekennzeichnet, dass** das Pflückaggregat mindestens eine Pflückwalze (16, 18) aufweist, deren einlaufseitige Spitze unterhalb des Einlaufbereichs des Pflückspalts (22) angeordnet ist.

6. Einzugs- und Pflückeinrichtung (10) nach einem der Ansprüche 1 bis 5, **dadurch gekennzeichnet, dass** sich die Hüllkreise des Einzugselements (12) und des Förderelements (14) überdecken.

7. Einzugs- und Pflückeinrichtung (10) nach einem der Ansprüche 1 bis 6, **dadurch gekennzeichnet, dass** die Fördergeschwindigkeit des Förderelements (14) größer als die des Einzugselements (12) oder damit etwa gleich ist.

8. Einzugs- und Pflückeinrichtung (10) nach einem der Ansprüche 1 bis 7, **dadurch gekennzeichnet, dass** das Förderelement (14) unterhalb und/oder oberhalb des Pflückspalts (22) angeordnet ist.

9. Einzugs- und Pflückeinrichtung (10) nach einem der Ansprüche 1 bis 8, **dadurch gekennzeichnet, dass** das Förderelement (14) unterhalb und/oder oberhalb des Einzugselements (12) angeordnet ist.

10. Einzugs- und Pflückeinrichtung (10) nach einem der Ansprüche 1 bis 9, **dadurch gekennzeichnet, dass** der Wirkungsbereich des Förderelements (14) etwa am Einlass des Pflückspalts (22) endet.

## Claims

1. Gathering and picking device (10) having a gathering element (12), which is arranged on a first side of a picking gap (22), can be set in rotation about an approximately vertical axis and is provided with carrier elements (26) which are designed to grasp plants (40) standing in a field as the device is operated, to introduce the plants into the picking gap (22) in cooperation with a conveying element (14) arranged upstream of the entry end of the picking gap (22) on the second side of the picking gap (22), and to convey them over at least part of the length of the picking gap (22), a picking unit being capable of being operated to convey the plants (40) downwards through the picking gap (22), such that the useful parts of the plants (40) are separated, **characterised in that** the conveying element (14) can be set in rotation about an approximately vertical axis.

2. Gathering and picking device (10) according to claim 1, **characterised in that** the conveying element (14) is provided with protruding teeth-like carrier elements (28).

3. Gathering and picking device (10) according to claim 1 or 2, **characterised in that** the carrier elements (28) of the conveying element are distributed around the circumference of a disc (30, 30') .

4. Gathering and picking device (10) according to one of claims 1 to 3, **characterised in that** pocket-like recesses (32) are formed between the carrier elements (28) of the conveying element (14).

5. Gathering and picking device (10) according to one of claims 1 to 4, **characterised in that** the picking unit has at least one picking roller (16, 18), the intake-side tip of which is arranged below the intake region of the picking gap (22).

6. Gathering and picking device (10) according to one of claims 1 to 5, **characterised in that** the operating envelopes of the gathering element (12) and of the conveying element (14) overlap.

7. Gathering and picking device (10) according to one of claims 1 to 6, **characterised in that** the conveying speed of the conveying element (14) is greater than, or approximately the same as, that of the gathering element (12).

8. Gathering and picking device (10) according to one of claims 1 to 7, **characterised in that** the conveying element (14) is arranged below and/or above the picking gap (22).

9. Gathering and picking device (10) according to one of claims 1 to 8, **characterised in that** the conveying element (14) is arranged below and/or above the gathering element (12).

10. Gathering and picking device (10) according to one of claims 1 to 9, **characterised in that** the sphere of action of the conveying element (14) ends approximately at the inlet of the picking gap (22).

## Revendications

1. Dispositif d'introduction et de cueillage (10), comportant un élément d'introduction (12), qui est agencé sur un premier côté d'une fente de cueillage (22) et qui peut être entraîné en rotation autour d'un axe vertical, et comportant des entraîneurs (26) qui sont aptes à saisir en cours de service des végétaux (40) dressés sur le champ, à les introduire dans la fente de cueillage (22) en coopération avec un élément de transport (14), agencé sur le deuxième côté de la fente de cueillage (22) en amont de l'extrémité du côté entrée de la fente de cueillage (22), et à les transporter sur au moins une partie de la longueur de la fente de cueillage (22), un groupe de cueillage pouvant être utilisé pour transporter les plantes vers le bas à travers la fente de cueillage (22) de manière à séparer les épis des végétaux (40), **caractérisé en ce que** l'élément de transport (14) est apte à être entraîné en rotation autour d'un axe à peu près vertical.

2. Dispositif d'introduction et de cueillage (10) selon la revendication 1, **caractérisé en ce que** l'élément de transport (14) est muni d'entraîneurs (28) en saillie en forme de dents.

3. Dispositif d'introduction et de cueillage (10) selon la revendication 1 ou 2, **caractérisé en ce que** les entraîneurs (28) de l'élément de transport sont répartis sur le pourtour d'un disque (30, 30').

4. Dispositif d'introduction et de cueillage (10) selon l'une quelconque des revendications 1 à 3, **caractérisé en ce que** des évidements (32) en forme de poches sont formés entre les entraîneurs (28) de l'élément de transport (14).

5. Dispositif d'introduction et de cueillage (10) selon l'une quelconque des revendications 1 à 4, **caractérisé en ce que** le groupe de cueillage comporte au moins un rouleau de cueillage (16, 18), dont la pointe du côté admission est agencée en dessous de la zone d'admission de la fente de cueillage (22).

6. Dispositif d'introduction et de cueillage (10) selon l'une quelconque des revendications 1 à 5, **caractérisé en ce que** l'enveloppante de l'élément d'introduction (12) et celle de l'élément de transport (14) se chevauchent.

7. Dispositif d'introduction et de cueillage (10) selon l'une quelconque des revendications 1 à 6, **caractérisé en ce que** la vitesse de transport de l'élément de transport (14) est supérieure à celle de l'élément d'introduction (12) ou est sensiblement égale à celle-ci.

8. Dispositif d'introduction et de cueillage (10) selon l'une quelconque des revendications 1 à 7, **caractérisé en ce que** l'élément de transport (14) est agencé au-dessous et/ou au-dessus de la fente de cueillage (22).

9. Dispositif d'introduction et de cueillage (10) selon l'une quelconque des revendications 1 à 8, **caractérisé en ce que** l'élément de transport (14) est agencé au-dessous et/ou au-dessus de l'élément d'introduction (12).

10. Dispositif d'introduction et de cueillage (10) selon l'une quelconque des revendications 1 à 9, **caractérisé en ce que** la zone d'action de l'élément de transport (14) se termine à peu près au niveau de l'admission de la fente de cueillage (22).
